# EUROPÄISCHE PATENTSCHRIFT

(11) **EP 2 904 916 B1**
(45) Veröffentlichungstag und Bekanntmachung des Hinweises auf die Patenterteilung: **20.07.2016**
(21) Anmeldenummer: 15000127.9
(22) Anmeldetag: 19.01.2015
(51) Int. Cl.: A41B 11/04, A41B 11/14, B29C 65/02, B29C 65/50, B29C 65/00, D03D 15/08, D03D 1/00, D03D 3/00, A41D 27/24

(54) **Strumpfhose**
Pantyhose
Collant

(30) Priorität: 10.02.2014 AT 912014
(43) Veröffentlichungstag der Anmeldung: 12.08.2015
(73) Patentinhaber: Wolford Aktiengesellschaft, 6900 Bregenz (AT)
(72) Erfinder: Röhrich, Andreas, 6841 Mäder (AT)
(74) Vertreter: Hofmann, Ralf U.

(56) Entgegenhaltungen:
- WO-A1-2009/027701
- DE-U- 7 036 478
- DE-U1-202005 021 963

## Beschreibung

Die Erfindung bezieht sich auf eine Strumpfhose, welche mindestens eine Verbindungsnaht aufweist, durch die zwei Strumpfhosenteile der Strumpfhose miteinander verschweißt sind und entlang von der ein die Verbindungsnaht überdeckendes Verstärkungsband auf die beiden durch die Verbindungsnaht miteinander verbundenen Strumpfhosenteile aufgeklebt ist.

Es ist bekannt Stücke aus Folienmaterial zu verbinden, indem die Stücke entlang der auszubildenden Verbindungsnaht unter Einwirkung von Hitze verschweißt werden, beispielsweise durch Ultraschallschweißen. Zur Verstärkung der auszubildenden Schweißnaht ist es im Weiteren bekannt, ein Verstärkungsband über die Schweißnaht aufzukleben.

Eine Strumpfhose der eingangs genannten Art geht aus der DE 20 2005 021 963 U1 hervor. Hier sind als Textilartikel, welche verschweißte Verbindungsnähte aufweisen, Sportbekleidung und/oder Kleidung, die direkt auf der Haut getragen werden soll, wie Unterhosen, Badehosen, Dessousartikel und auch Strumpfhosen genannt. Zur Verstärkung der verschweißten Verbindungsnähte ist ein Verstärkungsband über diese aufgeklebt. Wenn der Textilartikel dehnbar ist, wird auch ein dehnbares Verstärkungsband eingesetzt, wobei, um die verschweißte Verbindungsnaht zu schützen, das Verstärkungsband weniger leicht dehnbar ist als der Stoff des Textilartikels. Wenn die Stoffe des Textilartikels undehnbar sind, kann auch das Verstärkungsband undehnbar sein.

Ein Kleidungsstück, insbesondere ein direkt auf der Haut getragenes Kleidungsstück, mit in ähnlicher Weise verbundenen Teilen geht aus der EP 1 293 137 A1 hervor.

Die WO 2009/027701 A1 beschreibt die Ausbildung einer Naht zwischen zwei textilen Teilen, die durch Ultraschallschweißen, Verkleben oder Vernähen miteinander verbunden werden und auf die im Verbindungsbereich in der Folge ein Verstärkungsband aufgeklebt wird. Dieses ist in Querrichtung weitgehend undehnbar, in Längsrichtung aber dehnbar. Das Verstärkungsband kann unter Spannung auf die Textilteile im Nahtbereich aufgebracht sein, um einen Rüscheneffekt zu bewirken, sodass also die Textilteile in den Bereichen neben dem Verstärkungsband eine gewellte Anordnung erhalten.
Aufgabe der Erfindung ist es eine verbesserte Strumpfhose der eingangs genannten Art bereitzustellen. Erfindungsgemäß gelingt dies durch ein Verfahren mit den Merkmalen des Anspruchs 1.

Bei der Strumpfhose gemäß der Erfindung weist das gewebte Verstärkungsband in Längsrichtung des Verstärkungsbandes verlaufende Kettfäden, deren Dehnbarkeit mehr als 200% beträgt, und quer zur Längsrichtung des Verstärkungsbandes verlaufende Schussfäden auf, deren Dehnbarkeit weniger als 70%, vorzugsweise weniger als 50%, beträgt. Im Weiteren sind ohne Einwirkung einer äußeren Kraft auf die Strumpfhose die Maschen der Strumpfhosenteile in an das Verstärkungsband angeklebten Bereichen der Strumpfhosenteile gedehnt.

Durch die große Dehnbarkeit in Längsrichtung kann im Bereich der Verbindungsnaht eine hohe Dehnbarkeit der Strumpfhose in Längsrichtung der Verbindungsnaht erreicht werden. Durch die geringe Dehnbarkeit quer zur Längsrichtung des Verstärkungsbandes kann ein guter Schutz der Verbindungsnaht gegen ein Einleiten von quer zur Längsrichtung der Verbindungsnaht wirkenden Kräften, die ein Aufreißen der Verbindungsnaht bewirken würden, erreicht werden. Da das Verstärkungsband quer zu seiner Längsrichtung nur eine relativ geringe Ausdehnung aufweist, wird die gesamte Dehnbarkeit der Strumpfhose in diese Richtung dadurch kaum beeinträchtigt- Vorzugsweise beträgt die Breite des Verstärkungsbandes (also die Ausdehnung rechtwinkelig zu seiner Längserstreckung) weniger als 2cm und liegt z.B. bei etwa 1 cm.

Gemäß einer vorteilhaften Ausführungsform der Erfindung ist vorgesehen, dass die Strumpfhose eine mit einem wie zuvor beschriebenen Verstärkungsband abgedeckte Verbindungsnaht zwischen ersten und zweiten gestrickten Schlauchteilen aufweist. Diese Schlauchteile sind im Bereich eines Hosenteils der Strumpfhose aufgeschnitten und über eine hintere Verbindungsnaht, die im Bereich der Rückseite der Strumpfhose (also im Gesäßbereich) liegt, und über eine vordere Verbindungsnaht, die im Bereich der Vorderseite der Strumpfhose liegt, miteinander verbunden.

### (weiter auf Seite 3 der ursprünglichen Beschreibung)

Wenn in der vorliegenden Schrift von der "Dehnbarkeit" eines Fadens (=Garns) die Rede ist, so ist hiermit die maximale Verlängerung des Fadens (=Dehnung des Fadens) gemeint, ohne dass der Faden reißt.

Weitere Vorteile und Einzelheiten der Erfindung werden im Folgenden anhand der beiliegenden Zeichnung erläutert. In dieser zeigen:
Fig. 1 bis 3 schematische Darstellungen von grundlegenden Herstellungsschritten zur Ausbildung einer Strumpfhose gemäß der Erfindung;
Fig. 4 eine schematische Darstellung der fertiggestellten Strumpfhose;
Fig. 5 eine schematische Darstellung der Ausbildung einer Verbindungsnaht;
Fig. 6 eine schematische Darstellung von Abschnitten von zwei entlang der Verbindungsnaht miteinander verschweißten Strumpfhosenteilen, vor dem Auseinanderklappen, im Querschnitt;
Fig. 7 die verbundenen Strumpfhosenteile nach dem Aufbringen des Verstärkungsbandes;
Fig. 8 eine schematische Darstellung des Aufklebens des Verstärkungsbandes;
Fig. 9 eine schematische Darstellung des Aufbringens des Schmelzklebstoffes auf das Verstärkungsband.

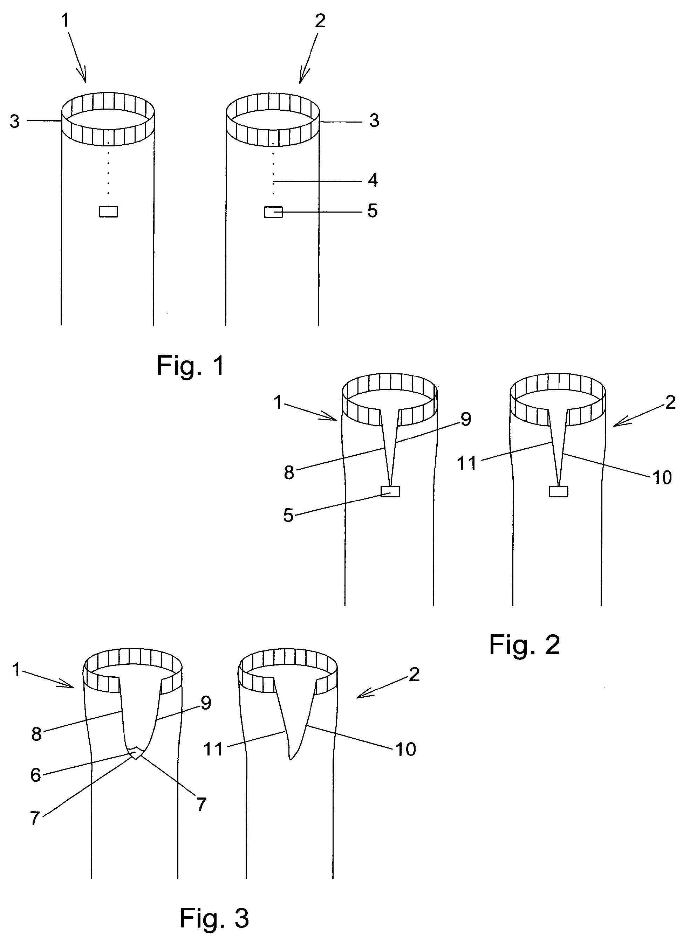

Ein Ausführungsbeispiel einer erfindungsgemäßen Strumpfhose und Varianten hierzu werden im Folgenden anhand der Fig. 1 bis 9 erläutert.

Fig. 1 zeigt zwei rundgestrickte Schlauchteile 1, 2. Die Schlauchteile 1, 2 können in herkömmlicher Weise ausgebildet sein. Im gezeigten Ausführungsbeispiel sind sie mit einem angestrickten Bund 3 versehen. In das jeweilige Schlauchteil 1, 2 ist eine Schneidemarkierung 4 und ein Maschenstopp 5 eingestrickt.

Die Schlauchteile 1, 2 werden entlang der Schneidemarkierung 4 unter Ausbildung von jeweiligen ersten und zweiten Schnitträndern 8, 9; 10, 11 aufgeschnitten, wie dies in Fig. 2 dargestellt ist. Das Aufschneiden der Schlauchteile 1, 2 erfolgt hierbei im Bereich eines auszubildenden Hosenteils der Strumpfhose.

In den unteren Endbereichen der ersten und zweiten Schnittränder 8, 9 wird ein Zwickel 6 mit einem ersten der Schlauchteile 1 verbunden, vgl. Fig. 3. Die Verbindung erfolgt entlang einer Verbindungsnaht 7.

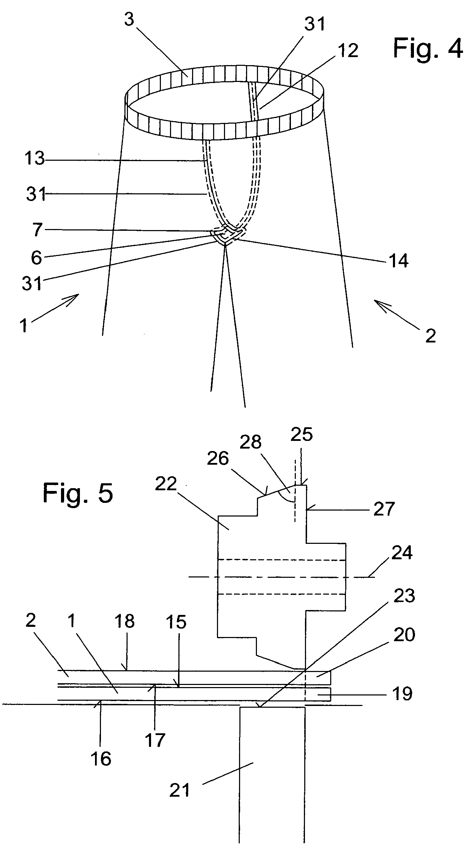

Das erste und das zweite Schlauchteil 1, 2 werden in oberhalb des Zwickels 6 liegenden Bereichen der ersten Schnittränder 8, 10 und in oberhalb des Zwickels 6 liegenden Bereichen der zweiten Schnittränder 9, 11 miteinander verbunden und das zweite Schlauchteil 2 wird in unteren Endbereichen der ersten und zweiten Schnittränder 10, 11 mit dem Zwickel 6 verbunden. Es wird hierbei eine hintere Verbindungsnaht 12 zwischen dem ersten und dem zweiten Schlauchteil 1, 2, die sich also über den Gesäßbereich der Strumpfhose erstreckt, und eine vordere Verbindungsnaht 13, die sich also über den Bauchbereich der Strumpfhose erstreckt, sowie eine Verbindungsnaht 14 zwischen dem Zwickel 6 und dem zweiten Schlauchteil 2 ausgebildet. Bei den Verbindungsnähten 12, 13 und 14 handelt es sich bevorzugterweise um Abschnitte einer durchgehenden Naht. Auf die Verbindungsnähte 7, 12, 13 und 14 werden Verstärkungsbänder 31 aufgeklebt, wie weiter unten beschrieben. Fig. 4 zeigt die fertiggestellte Strumpfhose (in deren oberem Bereich).

Abgesehen von der Ausbildung in den Bereichen der Verbindungsnähte 7, 12, 13, 14, welche im Folgenden anhand der Fig. 5 bis 9 genauer erläutert wird, entspricht die Ausbildung derjenigen von herkömmlichen Strumpfhosen.

Beispielhaft sind in den Fig. 5 bis 7 im Bereich der vorderen Verbindungsnaht 13 liegende Abschnitte der ersten und zweiten Schlauchteile 1, 2 dargestellt. Zur Ausbildung der vorderen Verbindungsnaht 13 werden die beiden Schlauchteile 1, 2 durch Aufschmelzen eines Garns der Schlauchteile 1, 2 entlang der Verbindungsnaht 13 miteinander verbunden, also entlang der Verbindungsnaht 13 miteinander verschweißt, wie dies in Fig. 5 schematisch dargestellt ist. Die Schlauchteile 1, 2 werden in an ihre ersten Schnittränder 8, 10 angrenzenden Bereichen übereinander gelegt, wobei die ersten Schnittränder 8, 10 parallel und bündig zueinander liegen.

Die im fertiggestellten Zustand der Strumpfhose die Außenseiten 15, 17 des ersten und zweiten Schlauchteils 1, 2 bildenden Oberflächen sind hierbei zueinander gerichtet. Die Schlauchteile 1, 2 könnten auch mit ihren im fertiggestellten Zustand der Strumpfhose die Innenseiten 16, 18 bildenden Oberflächen zueinander gerichtet sein. In der Folge werden die Schlauchteile 1, 2 in geringem Abstand von den ersten Schnitträndern 8, 10, der vorzugsweise weniger als 5mm beträgt, und parallel zu den ersten Schnitträndern 8, 10 miteinander verschweißt, um die Verbindungsnaht 13 auszubilden, welche also eine Schweißnaht ist. Vorzugsweise werden bei diesem Verschweißen gleichzeitig randseitig der Verbindungsnaht 13 liegende Randstreifen 19, 20 abgeschnitten (diese stellen also einen Stoffüberschuss dar). Denkbar und möglich wäre es auch, beim Verschweißen nur die Verbindungsnaht 13 auszubilden und die Randstreifen 19, 20 in einem separaten Arbeitsschritt abzuschneiden.

Das Verschweißen der Schlauchteile 1, 2 entlang der Verbindungsnaht 13 erfolgt im Ausführungsbeispiel durch Ultraschallschweißen. Die aufeinandergelegten Schlauchteile 1, 2 werden hierzu zwischen zwei Schweißstücken 21, 22 durchgeführt. Eines dieser Schweißstücke, im Ausführungsbeispiel das Schweißstück 21, ist die Sonotrode, die mit Ultraschallwellen beaufschlagt wird. Beim anderen Schweißstück 22 handelt es sich um das Gegenstück, d.h. den Amboss des Ultraschallschweißgerätes. Das Schweißstück 21 besitzt eine ebene Auflagefläche 23, auf der die übereinandergelegten Schlauchteile 1, 2 aufliegen. Das Schweißstück 22 ist in Form eines um die Drehachse 24 drehbaren Rades ausgebildet. Die Drehachse 24 liegt parallel zur Auflagefläche 23 und rechtwinkelig zur Längserstreckung der auszubildenden Verbindungsnaht 13. Das als Rad ausgebildete Schweißstück 22 besitzt eine bezogen auf die Drehachse 24 rotationssymmetrische äußere Umfangsfläche 25, die parallel zur Auflagefläche 23 liegt und mit der das Schweißstück 22 auf den übereinander gelegten Schlauchteilen 1, 2 aufliegt. Die äußere Umfangsfläche 25 ist also kreiszylindermantelförmig ausgebildet. An die Umfangsfläche 25 schließen beidseitig erste und zweite Seitenflanken 26, 27 an, welche rotationssymmetrisch bezüglich der Drehachse 24 sind.

Die erste Seitenflanke 26 liegt auf der von den Schnitträndern 8, 10 abgelegenen Seite der Umfangsfläche 25. Die erste Seitenflanke 26 schließt mit einer rechtwinkelig zur Drehachse 24 stehenden Ebene einen Winkel 28 ein, der vorzugsweise 75° +/- 5°, besonders bevorzugt 75° +/- 2° beträgt.

Die zweite Seitenflanke 27, die auf der näher bei den Schnitträndern 8, 10 liegenden Seite der Umfangsfläche 25 liegt, steht vorzugsweise zumindest im Wesentlichen rechtwinkelig zur Drehachse 24. Im Wesentlichen rechtwinkelig umfasst hierbei Abweichungen vom rechten Winkel von bis zu 5°.

Grundsätzlich könnte auch das Schweißstück 22, welches in Form des beschriebenen Rades ausgebildet ist, mit Ultraschall beaufschlagt sein und die Sonotrode bilden und das Schweißstück 21 den Amboss des Ultraschallschweißgerätes bilden.

In Fig. 5 sind die Schlauchteile 1, 2 und die Auflagefläche 23 und Umfangsfläche 25 der Übersichtlichkeit halber mit einem kleinen Abstand zueinander dargestellt. Tatsächlich liegen diese Teile aneinander an.

Die Schlauchteile 1, 2 besitzen zur Ermöglichung des Verschweißens entlang der Verbindungsnaht zumindest ein verschweißbares Garn, welches somit schmelzfähig ist. Dieses ermöglicht durch sein Aufschmelzen die Verbindung der beiden Schlauchteile 1, 2 entlang der Verbindungsnaht 13. Beim Schweißen wird das mindestens eine schmelzfähige Garn zumindest soweit geschmolzen, dass die Verbindung zwischen den zwei Schlauchteilen 1, 2 erreicht wird. Das schmelzfähige Garn weist insbesondere ein Thermoplast auf oder wird von einem Thermoplast gebildet. Vorzugsweise handelt es sich hierbei um Polyamid. Zusätzlich oder stattdessen könnten auch andere schmelzfähige Garne vorgesehen sein.

Anstelle des Verschweißens mittels Ultraschall könnten auch andere Arten des thermischen Verschweißens durchgeführt werden, beispielsweise Laserschweißen oder ein Verschweißen mittels mindestens eines aufgeheizten Schweißstückes.

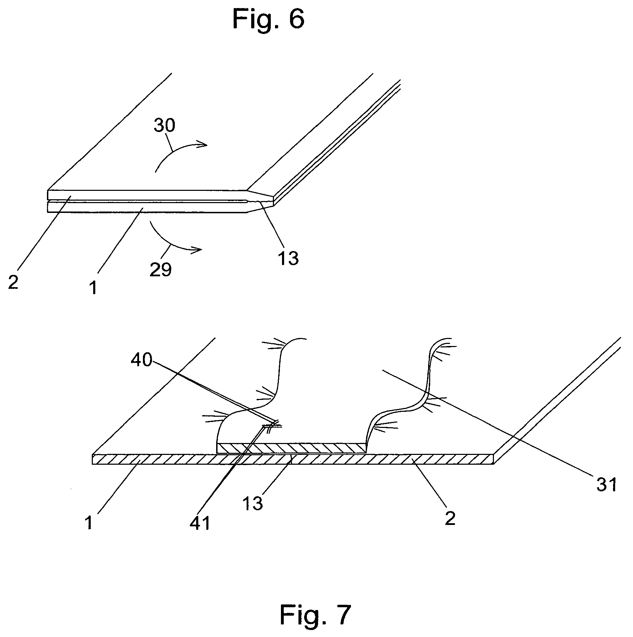

Ein Abschnitt der entlang der Verbindungsnaht 13 miteinander verschweißten Schlauchteile 1, 2 ist in Fig. 6 dargestellt. Die entlang der Verbindungsnaht 13 miteinander verschweißten Schlauchteile 1, 2 werden in der Folge auseinandergeklappt, wie dies in Fig. 6 durch die Pfeile 29, 30 angedeutet ist.

Die Schlauchteile 1, 2 sind damit entlang der Verbindungsnaht 13 miteinander verbunden. Diese Verbindungsnaht 13 wäre aber für sich alleine für den Gebrauch der Strumpfhose zu wenig stabil. Es wird somit in einem weiteren Arbeitsschritt ein die Verbindungsnaht 13 abdeckendes Verstärkungsband 31 aufgeklebt, welches günstigerweise eine Breite von 0,5cm bis 2cm aufweist. Das Verstärkungsband 31 verläuft also mit seiner Längserstreckung in Richtung der Verbindungsnaht 13 und ist in einem an die Verbindungsnaht 31 anschließenden Bereich des ersten Schlauchteils 1 mit dem ersten Schlauchteil 1 und in einem an die Verbindungsnaht 13 anschließenden Bereich des zweiten Schlauchteils 2 mit dem zweiten Schlauchteil 2 verklebt. Im Ausführungsbeispiel ist das Verstärkungsband 31 auf die im Gebrauch innenliegenden Innenseiten 16, 18 der Schlauchteile 1, 2 aufgeklebt, wie dies bevorzugt ist. Stattdessen könnte das Verstärkungsband 31 auch auf die Außenseiten 15, 17 aufgeklebt sein oder es könnte sowohl auf die Innenseiten 16, 18 als auch auf die Außenseiten 15, 17 ein jeweiliges Verstärkungsband 31 aufgeklebt sein.

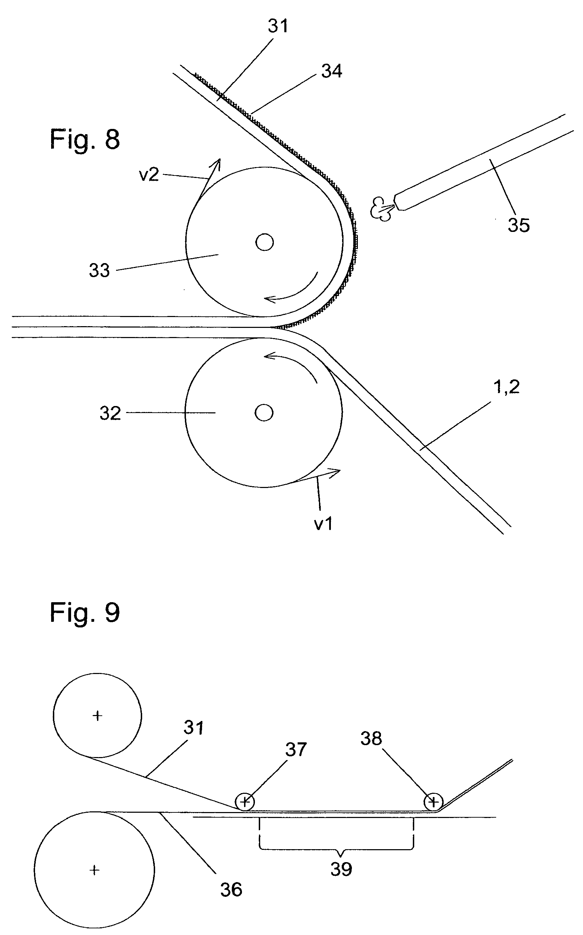

Das Verstärkungsband 31 weist im auf die Schlauchteile 1, 2 aufgeklebten Zustand, wenn keine äußere Kraft auf die Strumpfhose einwirkt, eine gewisse Welligkeit in Richtung seiner Längserstreckung auf, die in Fig. 7 angedeutet ist und weiter unten anhand Fig. 8 genauer erläutert wird.

Das Verstärkungsband 31 ist vorzugsweise gewebt. In Fig. 7 sind schematisch kurze Abschnitte von zwei Kettfäden 40 und von zwei Schussfäden 41 dargestellt. Die Kettfäden 40 verlaufen in Richtung der Längserstreckung des Verstärkungsbandes 31, also auch in Längsrichtung der Verbindungsnaht 13, d.h. parallel zu dieser. Die Schussfäden 41 verlaufen quer, insbesondere rechtwinkelig, zur Richtung der Längserstreckung des Verstärkungsbandes 31, also auch rechtwinkelig zur Verbindungsnaht 13.

Die Kettfäden 40 werden von einem Garn gebildet, welches eine Dehnbarkeit von mehr als 200% aufweist. Insbesondere trifft dies auf alle Kettfäden 40 des Verstärkungsbandes 31 zu.

Vorzugsweise weisen die Kettfäden 40 mindestens eine Elasthanfaser auf oder werden von einer solchen gebildet. In einer vorteilhaften Ausführungsform handelt es sich bei den Kettfäden 40 um ein Core-Garn mit mindestens einer Elasthanfaser als Kern. Der Kern kann einfach oder mehrfach umwunden sein, beispielsweise mit Polyamid.

Das Verstärkungsband 31 weist Schussfäden 41 auf, die von einem Garn gebildet werden, dessen Dehnbarkeit weniger als 70%, vorzugsweise weniger als 50% beträgt. Dies trifft vorteilhafterweise zumindest für mehr als die Hälfte der Schussfäden 41, vorzugsweise für alle Schussfäden 41 zu.

Die Schussfäden 41 können von einer oder von mehreren Fasern gebildet werden. In einer vorteilhaften Ausführungsform bestehen die Schussfäden alle oder zumindest zum Teil aus Polyamid und/oder Polyester und/oder Polypropylen.

Das Aufkleben des Verstärkungsbandes 31 ist schematisch in Fig. 8 dargestellt. Zum Aufkleben des Verstärkungsbandes 31 werden die entlang der Verbindungsnaht 13 miteinander verbundenen Schlauchteile 1, 2 zusammen mit dem Verstärkungsband 31, auf welches auf der den Schlauchteilen 1, 2 zugewandten Seite ein Klebstoff 34 aufgebracht ist, zwischen ersten und zweiten Andrückrollen 32, 33 durchgeführt. Die Andrückrollen 32, 33 drücken das Verstärkungsband 31 und die miteinander verbundenen Schlauchteile 1, 2 in einem Andrückbereich zusammen.

Beim Klebstoff 34 handelt es sich vorzugsweise um einen Schmelzklebstoff. Dieser wird mittels eines Heißluftgebläses 35 geschmolzen, bevor das Verstärkungsband 31 den Andrückbereich erreicht. Durch das Andrücken des mit dem Klebstoff 34 beschichteten Verstärkungsbandes 31 an die miteinander verbundenen Schlauchteile 1, 2 verbindet sich das Verstärkungsband 31 mit diesen.

Die Andrückrollen 32, 33 werden um ihre parallel zueinander liegenden Drehachsen angetrieben. Die Antriebseinrichtungen sind in Fig. 8 der Einfachheit halber nicht dargestellt. Der Antrieb erfolgt mit ersten und zweiten Drehgeschwindigkeiten, die zu entsprechenden Umfangsgeschwindigkeiten v1 und v2 (=tangentiale Geschwindigkeiten am Umfang der jeweiligen Andrückrolle 32, 33) führen. Die erste Andrückrolle 32, an der die miteinander verbundenen Schlauchteile 1, 2 anliegen, nimmt die miteinander verbundenen ersten und zweiten Schlauchteile 1, 2 mit der Umfangsgeschwindigkeit v1 mit, d.h. es liegt kein Schlupf zwischen der ersten Andrückrolle 32 und den miteinander verbundenen Schlauchteilen 1, 2 vor. Das Gleiche gilt für die Mitnahme des an der zweiten Andrückrolle 33 anliegenden Verstärkungsbandes 31 durch die zweite Andrückrolle 33 mit im Wesentlichen der Umfangsgeschwindigkeit v2.

Um die Mitnahme der Schlauchteile 1, 2 bzw. des Verstärkungsbandes 31 mit der Umfangsgeschwindigkeit der jeweiligen Andrückrolle 32, 33 zu erreichen, weisen die Andrückrollen 32, 33 vorzugsweise Oberflächen aus einem haftfähigen Material, insbesondere gummierte Oberflächen, und/oder aufgerauhte Oberflächen auf.

Die Umfangsgeschwindigkeit v1 beträgt im Ausführungsbeispiel 95% der Umfangsgeschwindigkeit v2, wobei ein Bereich von 90% bis 97% bevorzugt ist. Dadurch kommt es beim Zusammenführen des Verstärkungsbandes 31 mit den miteinander verbundenen Schlauchteilen 1, 2 zu einer Relativgeschwindigkeit, und somit zu einer Bewegung, zwischen dem Verstärkungsband 31 und den miteinander verbundenen Schlauchteilen 1, 2. Der Klebstoff 34 wird dadurch besser in Zwischenräume zwischen dem Garn oder den Garnen der Schlauchteile 1, 2 eingebracht, was eine verbesserte Verklebung des Verstärkungsbandes 31 mit den Schlauchteilen 1, 2 zur Folge hat.

Durch die größere Umfangsgeschwindigkeit v2 als v1 wird beim Zusammenführen des Verstärkungsbandes 31 mit den miteinander verbundenen Schlauchteilen 1, 2 auch eine größere Länge des Verstärkungsbandes 31 als die der Schlauchteile 1, 2 zugeführt. Dies bedeutet, dass die miteinander verbundenen Schlauchteile 1, 2 im mit dem Verstärkungsband 31 verklebten Bereich lokal gedehnt werden. Durch die Verklebung mit dem Verstärkungsband 31 wird diese Dehnung fixiert, sodass die Maschen der Schlauchteile 1, 2 in ihren an das Verstärkungsband 31 angeklebten Bereichen gedehnt sind. Diese Maschen sind damit auch größer als Maschen, die in vom Verstärkungsband 31 beabstandeten Bereichen liegen. Beim Aufkleben des Verstärkungsbandes 31 werden auch unmittelbar neben dem Verstärkungsband 31 liegende Bereiche der Strumpfhosenteile 1, 2 mitgedehnt. Diese Dehnungen führen nach dem Aufkleben des Verstärkungsbandes 31, wenn keine äußere Kraft auf die Strumpfhose einwirkt (=im entspannten Zustand der Strumpfhose), zu dem bereits erwähnten gewellten Verlauf des Verstärkungsbandes 31. Beim Tragen der Strumpfhose wird diese gedehnt, sodass der gewellte Verlauf des Verstärkungsbandes 31 gerade gezogen wird. Die Welligkeit des Verstärkungsbandes 31 führt bezogen auf eine Draufsicht auf eine Breitseite des Verstärkungsbandes 31 zu in Längsrichtung des Verstärkungsbandes 31. wechselweise aufeinanderfolgenden konkaven und konvexen Bereichen. Die Kettfäden 40 des Verstärkungsbandes 31 verlaufen also wellig, während die Schussfäden 41 gerade verlaufen.

Beim Zuführen der ersten und zweiten Schlauchteile 1, 2 zwischen die Andrückrollen 32, 33 wird vorzugsweise kein Zug auf die miteinander verbundenen ersten und zweiten Schlauchteile 1, 2 ausgeübt, der gegen den Vortrieb durch die Andrückrolle 32 wirkt, an der die miteinander verbundenen ersten und zweiten Schlauchteile 1, 2 anliegen. Ein solcher könnte die Verbindungsnaht 13 zwischen den beiden Schlauchteilen 1, 2 vor dem Aufkleben des Verstärkungsbandes 31 beschädigen. Am Verstärkungsband 31 könnte dagegen ein solcher Zug ausgeübt werden, wodurch eventuell die Welligkeit des Verstärkungsbandes 31 verringert oder aufgehoben werden könnte.

Die hintere Verbindungsnaht 12 wird abgesehen von im Folgenden beschriebenen Unterschieden in der gleichen Weise wie zuvor für die vordere Verbindungsnaht 13 beschrieben ausgebildet. Die Schlauchteile 1, 2 werden hier in an die zweiten Schnittränder 9, 11 anschließenden Abschnitten übereinandergelegt und in der beschriebenen Weise entlang der hinteren Verbindungsnaht 12 miteinander verschweißt und im Weiteren wird über die hintere Verbindungsnaht 12 ein Verstärkungsband 31 aufgeklebt. Das Aufkleben des Verstärkungsbandes 31 erfolgt ebenfalls in der beschriebenen Weise, wobei folgende Modifikation vorteilhaft ist: Der Geschwindigkeitsunterschied zwischen der Umfangsgeschwindigkeit v1 und der Umfangsgeschwindigkeit v2 ist vorteilhafterweise größer als beim Aufkleben des Verstärkungsbandes 31 über die vordere Verbindungsnaht 12. Im Ausführungsbeispiel beträgt beim Aufkleben des Verstärkungsbandes 31 über die hintere Verbindungsnaht 12 die Umfangsgeschwindigkeit v1 der ersten Andrückrolle 32 80% der Umfangsgeschwindigkeit v2 der zweiten Andrückrolle 33, wobei ein Wert von 70% bis 90% bevorzugt ist. Der Längenunterschied zwischen der zugeführten Länge des Verstärkungsbandes 31 und den miteinander verbundenen Schlauchteilen 1, 2 ist somit bei der hinteren Verbindungsnaht 12 größer als bei der vorderen Verbindungsnaht 13. Dies führt im entspannten Zustand der Strumpfhose auch zu einer stärkeren Wellung des aufgeklebten Verstärkungsbandes 31. Im fertiggestellten Zustand der Strumpfhose ist die Kraft, die für eine bestimmte Dehnung der Strumpfhose im Bereich der hinteren Verbindungsnaht 12 benötigt wird, kleiner als die Kraft, die für die gleiche Dehnung der Strumpfhose im Bereich der vorderen Verbindungsnaht 13 benötigt wird, jeweils bezogen auf die Längsrichtung der Verbindungsnaht 12, 13. Die Strumpfhose kann dadurch an die erforderliche größere Dehnung der hinteren Verbindungsnaht 12 im Vergleich zur vorderen Verbindungsnaht 13 (bezogen auf die Längsrichtung der jeweiligen Verbindungsnaht) beim Tragen der Strumpfhose angepasst werden.

In analoger Weise wie für den Bereich der vorderen Verbindungsnaht 13 beschrieben wird der Bereich der Verbindungsnaht 7 des Zwickels 6 mit dem ersten Schlauchteil 1 und der Bereich der Verbindungsnaht 14 des Zwickels 6 mit dem zweiten Schlauchteil 2 ausgeführt. Wiederum wird zunächst die Verbindungsnaht 7 bzw. 14 durch Verschweißen des ersten Schlauchteils 1 bzw. zweiten Schlauchteils 2 mit dem Zwickel 6 in der beschriebenen Weise durchgeführt. Im Weiteren wird das Verstärkungsband 31 in der beschriebenen Weise aufgeklebt.

Da die Verbindung des Zwickels 6 mit den Schlauchteilen 1, 2 besonders belastet ist, kann vorgesehen sein, die Verbindungsnähte 7, 14 und gegebenenfalls auch daran anschließende Abschnitte der Verbindungsnähte 12, 13 zusätzlich mit einem Faden zu vernähen. In diesem Bereich stört die zusätzliche Vernähung durch einen Faden den optischen Eindruck der Strumpfhose nicht maßgeblich. Zumindest in Abschnitten der vorderen und hinteren Verbindungsnähte 12, die an den Bund 3 anschließen und sich über mehr als 70% der gesamten Ausdehnung der jeweiligen Verbindungnaht 12, 13 erstrecken, erfolgt kein zusätzliches Vernähen mit einem Faden. Auch wenn die Strumpfhose unter einem relativ dünnen Stoff getragen wird, zeichnen sich diese Bereiche der vorderen und hinteren Verbindungsnähte 12, 13 somit kaum ab. Zudem wird ein sehr guter Tragekomfort erreicht.

Bei der Herstellung der Strumpfhose wird beispielsweise zunächst die Verbindungsnaht 7 ausgebildet und ein Verstärkungsband 31 über die Verbindungsnaht 7 aufgeklebt. In der Folge werden dann die Verbindungsnähte 12, 13, 14 ausgebildet und es wird ein durchgehendes Verstärkungsband 31 über diese aufgeklebt. Beispielsweise könnten aber auch zunächst alle in Form von Schweißnähten auszubildenden Verbindungsnähte 7, 12, 13, 14 ausgebildet und erst im Anschluss daran die Verstärkungsbänder 31 aufgebracht werden. Über aneinander anschließende Verbindungsnähte 7, 12, 13, 14 kann zumindest teilweise ein durchgehendes Verstärkungsband 31 aufgeklebt sein oder es können separate Verstärkungsbänder 31 aufgeklebt sein.

Falls in Bereichen von Verbindungsnähten diese zusätzlich mit einem Faden vernäht werden, also in den Bereichen der Verbindungsnähte 7, 14 und gegebenenfalls daran anschließenden Abschnitten der Verbindugnsnähte 12, 13 könnten in diesem Bereich beim Aufkleben eines Verstärkungsbandes 31 die Umfangsgeschwindigkeiten v1 und v2 auch gleich groß sein oder es könnte in diesem Bereich ein aufgeklebtes Verstärkungsband 31 auch entfallen.

Denkbar und möglich wäre es auch, dass die Verbindungsnähte 7, 14 und gegebenenfalls daran anschließende Abschnitte der Verbindungsnähte 12, 13 nur mit einem Faden genäht, also nicht verschweißt werden.

Anstelle von konstanten Umfangsgeschwindigkeiten v1, v2 der Andrückrollen 32, 33 während des Aufklebens des Verstärkungsbandes 31 über eine jeweilige Verbindungsnaht könnte auch eine während des Aufklebens sich ändernde Umfangsgeschwindigkeit der ersten Andrückrolle 32 und/oder der zweiten Andrückrolle 33 vorgesehen sein.

Fig. 9 zeigt schematisch eine mögliche Ausführungsform für das Aufbringen des Klebstoffs 34 auf das Verstärkungsband 31. Das Verstärkungsband 31 wird hierbei von einer Rolle abgewickelt und mit einem von einer weiteren Rolle abgewickelten Band 36 zusammengeführt, welches aus einem Schmelzklebstoff besteht. Die mittels Führungsrollen 37, 38 aneinander angelegten Bänder werden über eine Heizzone 39 geführt, in welcher das Band 36 zumindest teilweise geschmolzen und dadurch mit dem Verstärkungsband 31 verbunden wird. Das so mit dem Klebstoff 34 beschichtete Verstärkungsband 31 kann in der Folge wiederum aufgerollt werden, um später zusammen mit den miteinander verbundenen Strumpfhosenteilen den Andrückrollen 32, 33 zugeführt zu werden, oder direkt den Andrückrollen 32, 33 zugeführt werden.

Ein, beispielsweise chemisch aushärtender, Klebstoff könnte auch flüssig zwischen die miteinander verbundenen Strumpfhosenteile und das Verstärkungsband 31 vor dem Zusammenführen zugeführt werden.

Die Flächengewichte der Schlauchteile 1, 2 liegen zumindest in den zur Anlage an den Beinen vorgesehenen Bereichen der Schlauchteile 1, 2 vorzugsweise zwischen 15 g/m² und 300 g/m², vorzugsweise zwischen 20 g/m² und 70 g/m².

Beispielsweise wechseln im Gestrick der Strumpfhosenteile 1, 2 (abgesehen vom Bereich des Bundes 3) Reihen miteinander ab, die aus einem Garn ausgebildet sind, welches von einem mit Polyamid umwundenen Elasthan gebildet wird, und Reihen, die von einem aus Polyamid bestehenden Garn gebildet werden, miteinander ab. Es könnte auch vorgesehen sein weniger Reihen aus dem aus Polyamid bestehenden Garn auszubilden, beispielsweise jede dritte Reihe, oder alle Reihen aus dem mit Polyamid umwundenen Elasthan auszubilden.

Unterschiedliche Modifikationen der beschriebenen Ausführungsform der Erfindung sind denkbar und möglich, ohne den Bereich der Erfindung zu verlassen. So könnte beispielsweise ein Zwickel auch ganz entfallen.

**Legende**

| zu den Hinweisziffern: | | | |
|---|---|---|---|
| 1 | Schlauchteil | 29 | Pfeil |
| 2 | Schlauchteil | 30 | Pfeil |
| 3 | Bund | 31 | Verstärkungsband |
| 4 | Schneidemarkierung | 32 | erste Andrückrolle |
| 5 | Maschenstopp | 33 | zweite Andrückrolle |
| 6 | Zwickel | 34 | Klebstoff |
| 7 | Verbindungsnaht | 35 | Heißluftgebläse |
| 8 | erster Schnittrand | 36 | Band |
| 9 | zweiter Schnittrand | 37 | Führungsrolle |
| 10 | erster Schnittrand | 38 | Führungsrolle |
| 11 | zweiter Schnittrand | 39 | Heizzone |
| 12 | hintere Verbindungsnaht | 40 | Kettfaden |
| 13 | vordere Verbindungsnaht | 41 | Schussfaden |
| 14 | Verbindungsnaht | | |
| 15 | Außenseite | | |
| 16 | Innenseite | | |
| 17 | Außenseite | | |
| 18 | Innenseite | | |
| 19 | Randstreifen | | |
| 20 | Randstreifen | | |
| 21 | Schweißstück | | |
| 22 | Schweißstück | | |
| 23 | Auflagefläche | | |
| 24 | Drehachse | | |
| 25 | Umfangsfläche | | |
| 26 | erste Seitenflanke | | |
| 27 | zweite Seitenflanke | | |
| 28 | Winkel | | |

## Patentansprüche

1. Strumpfhose, welche mindestens eine Verbindungsnaht (7, 12-14) aufweist, durch die zwei Strumpfhosenteile (1, 2, 6) der Strumpfhose miteinander verschweißt sind und entlang von der ein die Verbindungsnaht (7, 12-14) überdeckendes Verstärkungsband (31) auf die beiden durch die Verbindungsnaht (7, 12-14) miteinander verbundenen Strumpfhosenteile (1, 2, 6) aufgeklebt ist, **dadurch gekennzeichnet, dass** das gewebte Verstärkungsband (31) in Längsrichtung des Verstärkungsbandes (31) verlaufende Kettfäden (40), deren Dehnbarkeit mehr als 200% beträgt, und quer zur Längsrichtung des Verstärkungsbandes (31) verlaufende Schussfäden (41) aufweist, deren Dehnbarkeit weniger als 70% beträgt und dass ohne Einwirkung einer äußeren Kraft auf die Strumpfhose die Maschen der Strumpfhosenteile (1, 2, 6) in an das Verstärkungsband (31) angeklebten Bereichen der Strumpfhosenteile (1, 2, 6) gedehnt sind.

2. Strumpfhose nach Anspruch 1, **dadurch gekennzeichnet, dass** das zumindest ein Teil der Schussfäden, vorzugsweise alle Schussfäden, aus Polyamid und/oder Polyester und/oder Polypropylen besteht bzw. bestehen.

3. Strumpfhose nach Anspruch 1 oder 2, **dadurch gekennzeichnet, dass** alle Kettfäden (40) des Verstärkungsbandes (31) eine Dehnbarkeit von mehr als 200% aufweisen.

4. Strumpfhose nach einem der Ansprüche 1 bis 3, **dadurch gekennzeichnet, dass** das Verstärkungsband (31) Schussfäden (41) aufweist, deren Dehnbarkeit weniger als 50% beträgt.

5. Strumpfhose nach einem der Ansprüche 1 bis 4, **dadurch gekennzeichnet, dass** zumindest mehr als die Hälfte der Schussfäden (41) des Verstärkungsbandes (31) eine Dehnbarkeit von weniger als 70%, vorzugsweise von weniger als 50% aufweist.

6. Strumpfhose nach Anspruch 5, **dadurch gekennzeichnet, dass** alle Schussfäden (41) des Verstärkungsbandes (31) eine Dehnbarkeit von weniger als 70%, vorzugweise von weniger als 50% aufweisen.

7. Strumpfhose nach einem der Ansprüche 1 bis 6, **dadurch gekennzeichnet, dass** die Verbindungsnaht (12) zwischen Strumpfhosenteilen ausgebildet ist, welche von gestrickten ersten und zweiten Schlauchteilen (1, 2) gebildet werden, die im Bereich eines Hosenteils der Strumpfhose aufgeschnitten sind und über die Verbindungsnaht (12) im Bereich der Rückseite der Strumpfhose miteinander verbunden sind.

8. Strumpfhose nach einem der Ansprüche 1 bis 7, **dadurch gekennzeichnet, dass** die Verbindungsnaht (13) zwischen Strumpfhosenteilen ausgebildet ist, welche von gestrickten ersten und zweiten Schlauchteilen (1, 2) gebildet werden, die im Bereich eines Hosenteils der Strumpfhose aufgeschnitten sind und über die Verbindungsnaht (13) im Bereich der Vorderseite der Strumpfhose miteinander verbunden sind.

9. Strumpfhose nach einem der Ansprüche 1 bis 8, **dadurch gekennzeichnet, dass** die Strumpfhose zumindest in einem zur Anlage an den Beinen vorgesehenen Bereich der Strumpfhose ein Flächengewicht aufweist, welches zwischen 15 g/m² und 300 g/m² beträgt.

## Claims

1. Pantyhose which has at least one connecting seam (7, 12-14) by which two parts (1, 2, 6) of the pantyhose are welded together and along which a reinforcing strip (31) which covers the connecting seam (7, 12-14) is adhesive-bonded to the two pantyhose parts (1, 2, 6) which are connected together by the connecting seam (7, 12-14), **characterised in that** the reinforcing strip (31), when woven, has warp filaments (40) extending in the longitudinal direction of said reinforcing strip (31) whose extensibility is more than 200% and weft filaments (41) extending transversely to the longitudinal direction of said reinforcing strip (31) whose extensibility is less than 70% and **in that**, with no external force acting on the pantyhose, the stitches of the pantyhose parts (1, 2, 6) are stretched in regions of the pantyhose parts (1, 2, 6) which are adhesive-bonded to the reinforcing strip (31).

2. Pantyhose according to claim 1, **characterised in that** at least some of the weft filaments, and preferably all the weft filaments, are composed of polyamide and/or polyester and/or polypropylene.

3. Pantyhose according to claim 1 or 2, **characterised in that** all the warp filaments (40) of the reinforcing strip (31) have an extensibility of more than 200%.

4. Pantyhose according to one of claims 1 to 3, **characterised in that** the reinforcing strip (31) has weft filaments (41) whose extensibility is less than 50%.

5. Pantyhose according to one of claims 1 to 4, **characterised in that** at least more than half of the weft filaments (41) of the reinforcing strip (31) have an extensibility of less than 70%, and preferably of less than 50%.

6. Pantyhose according to claim 5, **characterised in that** all the weft filaments (41) of the reinforcing strip (31) have an extensibility of less than 70%, and preferably of less than 50%.

7. Pantyhose according to one of claims 1 to 6, **characterised in that** the connecting seam (12) is formed between pantyhose parts which are formed by knitted first and second tubular parts (1, 2) which are cut open in the region of a panty section of the pantyhose and which are connected together by means of the connecting seam (12) in the region of the rear face of the pantyhose.

8. Pantyhose according to one of claims 1 to 7, **characterised in that** the connecting seam (13) is formed between pantyhose parts which are formed by knitted first and second tubular parts (1, 2) which are cut open in the region of a panty section of the pantyhose and which are connected together by means of the connecting seam (13) in the region of the front face of the pantyhose.

9. Pantyhose according to one of claims 1 to 8, **characterised in that**, at least in an area intended to rest against the legs, the weight per unit area of the pantyhose is between 15 g/m² and 300 g/m².

## Revendications

1. Collant comportant au moins une ligne de liaison (7, 12-14) par laquelle deux parties (1, 2, 6) du collant sont soudées l'une à l'autre, et, le long de laquelle une bande de renfort (31) recouvrant la ligne de liaison (7, 12-14) est collée sur les deux parties de collant (1, 2, 6) reliées entre elles par la ligne de liaison,
**caractérisé en ce que**
la bande de renfort (31) est une bande tissée comportant des fils de chaîne (40) s'étendant dans la direction longitudinale de la bande de renfort (31) et dont l'extensibilité est supérieure à 200% et des fils de trame (41) s'étendant transversalement à la direction longitudinale de la bande de renfort (31) et dont l'extensibilité est inférieure à 70%, et **en ce que** sans action d'une force externe sur le collant, les mailles des parties de collant (1, 2, 6) sont étirées dans leurs zones collées à la bande de renfort (31).

2. Collant conforme à la revendication 1,
**caractérisé en ce qu'**
au moins une partie des fils de trame, de préférence tous les fils de trame sont réalisés en polyamide et/ou en polyester et/ou en polypropylène.

3. Collant conforme à la revendication 1 ou 2,
**caractérisé en ce que**
tous les fils de chaîne (40) de la bande de renfort (31) ont une extensibilité supérieure à 200%.

4. Collant conforme à l'une des revendications 1 à 3,
**caractérisé en ce que**
la bande de renfort (31) renferme des fils de trame (41) dont l'extensibilité est inférieure à 50%.

5. Collant conforme à l'une des revendications 1 à 4,
**caractérisé en ce qu'**
au moins plus de la moitié des fils de trame (41) de la bande de renfort (31) ont une extensibilité inférieure à 70%, de préférence inférieure à 50%.

6. Collant conforme à la revendication 5,
**caractérisé en ce que**
tous les fils de trame (41) de la bande de renfort (31) ont une extensibilité inférieure à 70%, de préférence inférieure à 50%.

7. Collant conforme à l'une des revendications 1 à 6,
**caractérisé en ce que**
la ligne de liaison (12) est réalisée entre des parties de collant qui sont formées par une première et une seconde parties de tube tricotées (1, 2) qui sont ouvertes par découpe dans la zone d'une partie de pantalon du collant et sont reliées par la ligne de liaison (12) dans la zone du côté arrière du collant.

8. Collant conforme à l'une des revendications 1 à 7,
**caractérisé en ce que**
la ligne de liaison (13) est réalisée entre des parties de collant qui sont formées par une première et une seconde parties de tube tricotées (1, 2) qui sont ouvertes par découpe dans la zone de la partie de pantalon du collant et sont reliées par la ligne de liaison (13) dans la zone du côté avant du collant.

9. Collant conforme à l'une des revendications 1 à 8,
**caractérisé en ce que**
le collant a, au moins dans une zone prévue pour venir s'appliquer sur les jambes, un poids surfacique compris entre 15 g/m² et 300 g/m².
